# EUROPEAN PATENT APPLICATION

(11) **EP 4 286 045 A1**
(43) Date of publication of application: **06.12.2023**
(21) Application number: 23171893.3
(22) Date of filing: 05.05.2023
(51) Int. Cl.: B01J 20/26, B01J 20/28, G01N 1/40

(54) **SYNTHESIS OF POLYMER ADSORBENT FOR PASSIVE AIR SAMPLING**

(30) Priority: 03.06.2022 TR 202209102
(71) Applicant: Tubitak, 06680 Ankara (TR)
(72) Inventor: ERDOGAN BEDRI, Tuba, 41470 Kocaeli (TR); SARIOGLAN, Serife, 41470 Kocaeli (TR); ÜNVEREN, Elif, 41470 Kocaeli (TR); BAYIR, Sümeyra, 41470 Kocaeli (TR); CEYLAN, Özcan, 41470 Kocaeli (TR)

(57) **Abstract**

The present invention provides new properties by adding boron nitride nanosheet (BNNS) (13) as well as chemically synthesizing the VOC adsorbent. Poly(2,6-diphenyl-p-phenylene oxide) (PPPO), known under the trademark of Tenax, was produced as a polymeric adsorbent by reinforcing with BNNS in granule form and high capacity, and it was called as MPPPO-BN adsorbent (21). The use of MPPPO-BN adsorbent (21) as an adsorbent material for VOCs has been proven by desorption tests from ambient temperature to 340°C depending on VOCs.

The product developed with BNNS additive, being used as a polymeric adsorbent, has the capacity to adsorb more VOCs, prevent the agglomeration of polymer particles, and have a higher density than Tenax TA and Tenax GR.

## Description

### Technical Field of the Invention

The present invention relates to the production of a polymer adsorbent for volatile organic compounds (VOC) in indoor and ambient air.

### Prior Art

Volatile organic compounds (VOCs) resulting from various industrial and environmental activities are organic chemicals with toxic, carcinogenic and bioaccumulative properties. VOCs, which contain many harmful air pollutants, can occur in non-industrial indoor and outdoor air samples and industrial workplaces and also in various materials used in daily life. VOCs include all organic compounds from anthropogenic and biogenic sources except methane, which can react with nitrogen oxides in sunlight to form photochemical oxidants. Most volatile organic compounds are precursors of photochemical oxidant pollution, and some of them contribute to global warming by causing ozone layer depletion. United States Environmental Protection Agency (EPA) lists acute and chronic respiratory effects on human health; eye, nose and throat irritation, headache, incoordination, liver, kidney and central nervous system damage among the effects of being exposed to volatile organic compounds. For this reason, in order to protect human health and prevent short and long-term negative effects on the environment, the analysis and monitoring of air pollutants in the atmosphere, the maximum availability of which is determined by national and international environmental and health organizations, is of great importance. Atmospheric concentrations of VOCs are measured for various reasons, such as determining the source of VOCs, conducting the studies on health effects, and checking the compliance with regulatory limit values. The concentrations of VOCs in the air may vary depending on the time and place. Measurement techniques should be designed appropriately for these variations and different environments.

VOCs constitute an important class of air pollutants and some of them have carcinogenic effects. The most common ones are Benzene, Toluene, Ethylbenzene and Xylene, called as BTEX. Active or passive sampling of VOCs onto solid adsorbents is commonly-used method for collecting air samples.

Examples of adsorbent materials are Carbosieve, Carboxen^{™}, Carbotrap^{™}, Tenax^{™} TA, Tenax^{™} GR and Carbograph and glass beads. Carboxen^{™} and Carbotrap^{™}, Sigma-Aldrich Co., St. are registered trademarks of Louis Mo. Tenax is a registered trademark of the Dutch company Buchem B.V.

Tenax is hydrophobic, having a good thermal stability, which is used as a column packing material and a trapping adsorbent for VOCs. Tenax is a porous polymer based on 2,6-diphenyl-p-phenylene oxide. Poly(2,6-diphenyl-p-phenylene oxide) (PPPO) was developed as a column filler [Wijk, 1970]. The polymerization of PPPO specified in the in United States patent document numbered US3432466 (A), it is stated that oxidative polymerization is a widely used method in the chemical synthesis of PPPO.

There are different versions of Tenax adsorbent such as Tenax TA and Tenax GR with 23% graphitized carbon [Cao *et al.,* 1993]. It has been used as an adsorbent with Tenax has been used in several studies and has shown high performance with additives. Tenax is proposed as an adsorbent for volatile organic compounds in United States patent document numbered US4003257 (A). PPPO polymer was first used as an adsorbent by the National Aeronautics and Space Administration (NASA) for the preconcentration of VOCs [Bertsch et al., 1974]. The granular form of PPPO is used as an adsorbent material in the standard methods of the United States Environmental Protection Agency (US EPA) to monitor air quality and industrial emissions.

Volatile organics at ppb (parts per billion) and ppt (parts per trillion) levels can be determined by using thermal desorption techniques such as Scientific Instrument Services (S.I.S) Purge and Trap system with the Short Path Thermal Desorption System, and the adsorbent Tenax TA / Tenax GR.

In the processing technique of Tenax-TA adsorbent specified in the Chinese patent document numbered CN102451668A, high adsorption efficiency and reproducibility were obtained in the measurement of BTEX in outdoor air. In the Chinese patent document number CN102288455A, the technique where Tenax-TA and activated carbon adsorbent are used together, benzene and total volatile organic compounds (TVOC) in indoor air are sampled at the same time, improving their reproducibility and recovery rates.

### Technical Problem and Technical Solution that the Invention Aims to Solve

The technical problem that the present invention tries to solve is agglomeration, which reduces the adsorption capacity of the PPPO polymer existing in the state of the art. Agglomeration creates poor reproducibility during loading of sample and elution of analytes. This problem has been solved by adding at least 1% BNNS (Boron nitride nanosheet) to the adsorbent. BNNS is formed by the mechanical exfoliation of hexagonal boron nitride, resulting in an increase in interlayer spacing between adjacent BNNS layers.

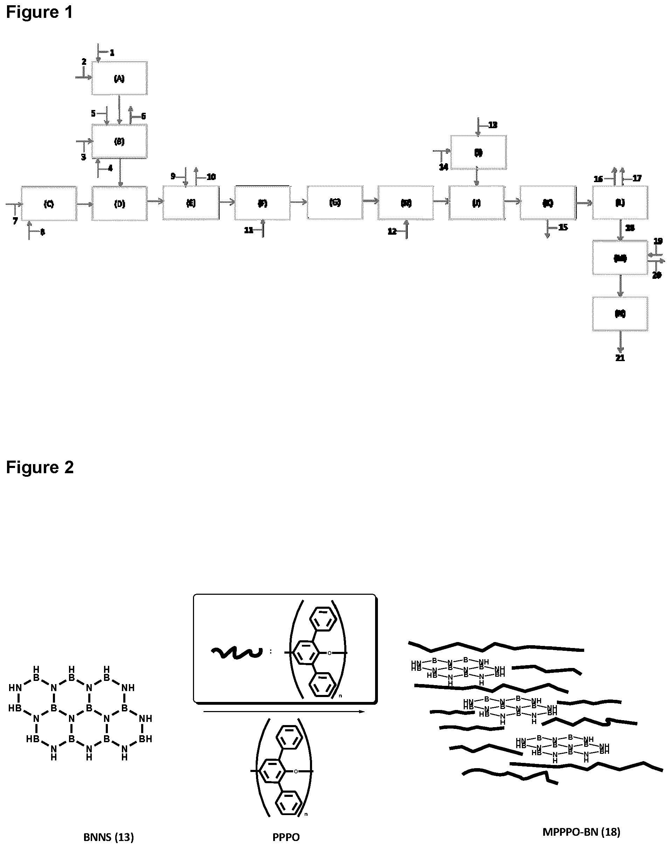

The structures of PPPO polymer and BNNS (13) are shown in Figure 2. BNNS (13) prevents agglomeration of polymer particles and provides lubricating properties. In this way, a polymeric adsorbent (21) developed in the present invention, which does not agglomerate and has a higher density than the commercial Tenax TA.

The technical problem that the present invention tries to solve is that low molecular weight VOCs cannot be reliably adsorbed. This problem was actually solved by increasing the density of MPPPO-BN (boron nitride reinforced modified PPPO) compared to Tenax TA and Tenax GR, which is obtained by adding low-loading rate BNNS to PPPO, so that more VOC can be adsorbed.

### Description of Figures

**Figure 1****.** Flow chart of the production process of MPPPO-BN adsorbent (21)
**Figure 2****.** The reaction mechanism of MPPPO-BN (18)

### Description of References in Figures

**A:** Formation of the reaction mixture by taking MgSO₄ (anhydrous) (1) and o-dichlorobenzene (2) into the reactor
**B:** Adding TMEDA (3) and CuCl (4) into the reaction mixture formed in the step A and mixing it in dry air (5), (6) atmosphere for 10 minutes.
**C:** Dissolving 2,6 diphenylphenol (7) in o-dichlorobenzene (8)
**D:** Adding the solution dropwise formed in the step C to the reaction mixture formed in the step B
**E:** Polymerization
**F:** Addition of hydrazine (11) to the polymer mixture at the end of the specified polymerization time
**G:** Obtaining PPPO polymer by passing the polymer mixture through Al₂O₃ column
**H:** Dissolving the PPPO polymer, obtained by the step G, in tetrahydrofuran (THF) (12)
**I:** Obtaining a mixture by ultrasonication of BNNS (13) and methanol (14)
**J:** Purification of PPPO polymer dissolved in the step H by precipitation into the mixture obtained in the step I
**K:** Filtration of the polymer purified in the step J
**L:** Drying
**M:** Calcination
**N:** Sieving
**1:** MgSO₄ (anhydrous)
**2:** o-dichlorobenzene
**3:** N,N,N',N'-Tetramethyl ethylenediamine (TMEDA)
**4:** CuCl
**5:** Dry air
**6:** Dry air
**7:** 2,6-diphenylphenol
**8:** o-dichlorobenzene
**9:** Dry air
**10:** Dry air
**11:** Hydrazine
**12:** Tetrahydrofuran (THF)
**13:** BNNS
**14:** Methanol
**15:** Isolation of methanol (14)
**16:** Solvent
**17:** Humidity
**18:** MPPPO-BN polymer
**19:** N₂
**20:** N₂
**21:** MPPPO-BN adsorbent

### Description of the Invention

VOCs from air samples are adsorbed on a porous polymer based on 2,6-diphenyl-p-phenylene oxide (PPPO) and are desorbed at temperatures from ambient temperatures to the order of 340°C depending upon the VOCs. PPPO porous polymer has effective adsorptivity and desorptivity and it can maintain the relatively high temperatures. In the present invention, PPPO polymer is produced in granular form as a polymeric adsorbent by reinforcing with BNNS. After this section, the synthesis and analysis of the MPPPO-BN polymeric adsorbent (21) specific to the present invention will be described in detail. Poly(2,6-diphenyl-p-phenylene oxide) (PPPO) is prepared by oxidative polymerization of 2,6-diphenylphenol.

The present invention will be described in more detail and specifically with reference to an example. The claims cannot be interpreted as being limited to examples to narrow the scope of the invention.

### The specific embodiment:

For the synthesis of BNNS-reinforced Poly(2,6-diphenyl-p-phenylene oxide) (PPPO), 46.8 g (0.39 mol) of MgSO₄ (anhydrous) (1) was added to 351 mL of o-dichlorobenzene (2) into a 1L reactor at room temperature (A). Then, 0.544 g (4.68 mmol) N,N,N',N'-Tetramethyl ethylenediamine (TMEDA) (3) and 0.926 g (9.35 mmol) CuCl (4) were added to the reaction mixture obtained after the step A, respectively. The mixture is stirred for 10 minutes under the atmosphere of dry air (5), (6) at room temperature (B). 92.43 g (0.38 mmol) of 2,6-diphenylphenol (7) is dissolved in 351µmL of o-dichlorobenzene (8) (C). The solution obtained in step C is added drop by drop to the reaction mixture obtained in step B (D). The reaction is performed at 85 °C for 24 hours (polymerization) (E) under an atmosphere of dry air (9), (10) after the dropping process is complete. Dry air is in constant flow. At the end of the specified 24 hour period, 2-3 mL (1%-2% (v/v)) hydrazine (11) is added to the polymer mixture, which is cooled at room temperature for 15-20 minutes, to reduce diphenoquinone by-products until the deep red color caused by the diphenoquinone by-products disappears (F). After step F, the polymer mixture is passed through an Al₂O₃ (aluminum oxide) column filled with neutral alumina (G) to obtain PPPO polymer. The PPPO polymer synthesized after the step G is dissolved in tetrahydrofuran (THF) (12) (H). Boron nitride nanosheet (BNNS) (particle size 30-65 nm) (13), obtained after hexagonal boron nitride exfoliation process, was added to the methanol (14), used to precipitate the PPPO polymer, at the rate of 1% to 5% and stirred via ultrasonication for 1-20 minutes (I). The polymer dissolved in the step H is purified by precipitation (J) in a methanol (14) mixture containing 1% BNNS obtained from the step I. Afterwards, the polymer purified in the step J is filtered to isolate methanol (15) and separated from methanol (14) by filtration (K). The polymer (collected on the filter) in the step K is dried (L) in a vacuum oven at 50°C for 2 days to remove humidity (16) and solvent (17) and MPPPO-BN polymer (18) is obtained (synthesized).

MPPPO-BN polymer (18) refers to boron nitride reinforced modified PPPO (Figure 2). After the step L, the synthesized BNNS-reinforced MPPPO-BN polymer (18) is calcined (M) from 25 °C to 400 °C (2 °C/min) and then at 400 °C for 1 hour under N₂ atmosphere (19), (20). Then, the calcined polymer is passed through a sieve to obtain the particle size in the range of 60-80 mesh (N) and MPPPO-BN adsorbent (21) is obtained.

### Analysis of MPPPO-BN adsorbent (21):

**Conditioning:** Passive samplers containing adsorbent must be conditioned for 90 minutes under inert gas (100 mL/min) at 340 °C before being used in field studies. In this way, organic pollutants trapped in the sampler are cleaned from the adsorbent surface.

**Table 1. Measurement parameters of MPPPO-BN polymeric adsorbent (21)**

| | |
|---|---|
| Maximum Temperature | 400 °C |
| Conditioning Temperature | 340 °C |
| Analysis Temperature | 320 °C |

**Sampling:** In accordance with EN 13528 (Ambient air quality) standard, organic gases are collected from ambient air by diffusion-based adsorption, depending on time, with the help of passive sampler tubes installed in different places in the area where the air quality will be monitored. Sampling time can be set to 1, 2 or 4 weeks.

**Analysis:** The organic gases collected on the adsorbent surface are analyzed using a Thermal Desorber - Gas Chromatography - Mass Spectrometer (TD-GC-MS) device connected to each other in accordance with the relevant standard.

Organic gases collected (adsorption) from the field in passive samplers are separated from the adsorbent surface with the help of helium (He) carrier gas (desorption) at a spaecified temperature and kept on the adsorbent surface in the trap, found in Thermal Desorber device, which is cooled at -20 °C.

In the analysis phase, the organic compounds kept in the trap are sent to the GC-MS device with a heating up to 320 °C (40 °C/s), and their amounts are determined. Recovery and field study results for BTEX (Benzene, Toluene, Ethyl benzene and Xylene) are given in Table 3 and Table 4 below. The rates given in Table 3 are not adsorbing rates. It shows the recovery rate (analysis step) made on the spiked adsorbent. In such studies with passive samplers, uncertainty rates are high since each sampler will behave like a different sample. In a different study, these rates may be better for MPPPO-BN.

**Table 3. Comparison of recovery studies of MPPPO-BN polymeric adsorbent (21) with commercial Tenax.**

| | | **0,500 µg spike recovery amount (µg) ve rates(%)** | | | | |
|---|---|---|---|---|---|---|
| | | **Benzene** | **Toluene** | **Ethyl Benzene** | ***mp-*Xylene** | ***o-*Xylene** |
| Commercial TENAX | **Control Sample** | **0.031** | **0.049** | **0.043** | **0.040** | **0.040** |
| | Commercial TENAX | 0.482 (%96.4) | 0.488 (%97.6) | 0.499 (%99.8) | 0.501 (%100.2) | 0.487 (%97.4) |
| MPPPO-BN | **Control Sample** | **0.046** | **0.042** | **0.041** | **0.030** | **0.036** |
| | MPPPO-BN | 0.467 (%93.4) | 0.486 (%97.2) | 0.500 (%100) | 0.493 (%98.6) | 0.471 (%94.2) |

**Table 4. Comparison of MPPPO-BN polymeric adsorbent (21) with commercial Tenax after four weeks of fieldwork.**

| | | **Sonuç (µg)** | | | | |
|---|---|---|---|---|---|---|
| | | **Benzene** | **Toluene** | **Ethyl Benzene** | ***mp-*Xylene** | ***o-*Xylene** |
| Commercial TENAX | **Control Sample** | **0.003** | **0.003** | **0.012** | **0.008** | **0.011** |
| | 1 | 0.027 | 0.095 | 0.025 | 0.040 | 0.027 |
| | 2 | 0.028 | 0.137 | 0.028 | 0.044 | 0.030 |
| | 3 | 0.041 | 0.187 | 0.042 | 0.075 | 0.051 |
| MPPPO-BN | **Control Sample** | **0.027** | **0.010** | **0.015** | **0.011** | **0.015** |
| | **1** | 0.071 | 0.121 | 0.034 | 0.046 | 0.035 |
| | **2** | 0.078 | 0.161 | 0.046 | 0.060 | 0.045 |
| | **3** | 0.080 | 0.156 | 0.037 | 0.051 | 0.036 |

The control sample was collected from the field simultaneously with the collected samples. Other results; unlike the control, it covers the results of measurements obtained from passive samplers including commercial and synthetic adsorbent collected from the field. Each control sample is a separate sampler, and each sample is a separate sampler. All these samplers were conditioned at 340 °C under the same conditions, used in the field and analyzed at 320 °C. The results obtained are acceptable values within a certain tolerance range, due to the each sampler will act as an independent sample.

Table 3 illustrates that, the synthesized adsorbent (MPPPO-BN (21)) and the commercially available adsorbent showed an equivalent performance when evaluated in terms of desorption performance. Moreover, the synthesized adsorbent and the commercially available adsorbent were used simultaneously in field studies, and they give equivalent results observed in Table 4. When comparing two adsorbents showing equivalent adsorbing capacity, BN reinforced MPPPO (21) offers less adsorbent loading in to the passive sampler than commercial Tenax because of its high density. This benefit provides an advantage in terms of cost effectiveness.

**Table 5. Performance values of MPPPO-BN polymeric adsorbent (21)**

| | | **2 Thermal Cycles** | | **20 Thermal Cycles** | | **50 Thermal Cycles** | |
|---|---|---|---|---|---|---|---|
| **VOCs** | **Spike Cone. µg** | **Amount (µg)** | **Recovery** | **Amount µg** | **Recovery** | **Amount (µg)** | **Recovery** |
| Benzene | 0.500 | 0.5530 | 110.6 | 0.524 | 104.8 | 0.514 | 102.8 |
| Toluene | 0.500 | 0.5190 | 103.8 | 0.489 | 97.8 | 0.524 | 104.8 |
| Ethyl Benzene | 0.500 | 0.5080 | 101.6 | 0.485 | 97.0 | 0.536 | 107.2 |
| *mp-*Xylene | 0.500 | 0.5200 | 104.0 | 0.487 | 97.4 | 0.519 | 103.8 |
| o- Xylene | 0.500 | 0.5230 | 104.6 | 0.456 | 91.2 | 0.493 | 98.6 |

For the selected VOC parameters, there is no significant change in the performance of the adsorbent (MPPPO-BN (21)), used in the sampler, with the increase in the number of thermal cycles. The variances seen in Table 5 are related to the measurement uncertainty from the analysis. After 50 thermal cycles, it is seen that the recovery rates are acceptable within the analysis uncertainty and the lifetime of the adsorbent (MPPPO-BN (21)) continues. After preparation of passive samplers containing adsorbent, they are exposed to high temperatures (340 °C and 320 °C) during the conditioning and analysis stages (2 thermal cycles). The fact that the number of thermal cycles is high, means that the adsorbent is used many times, affects the performance character of the adsorbent. Table 5 shows the performance change achieved with a long-term use of MPPPO-BN.

As a result of the analysis, MPPPO-BN adsorbent (21) has the properties shown in Table 6, compared to commercial products.

**Table 6. Comparison of the characteristic properties of the polymeric adsorbent (MPPPO-BN (21)) in the present invention with the commercial product.**

| | **Temper ature Limit (°C)** | **Affinity** | **Particle Size (mesh)** | **Surface Area (m²/g)** | **Density (g/ml)** | **VOC range** | **Chemical Structure** |
|---|---|---|---|---|---|---|---|
| Tenax TA | 350 | Hydrophobic | 60/80 | 35 | 0.25 | n-C7 - n-C26 | PPPO |
| Tenax GR | 350 | Hydrophobic | 60/80 | 24.1 | 0.55 | n-C7 - n-C30 | PPPO + %30 graphite |
| **MPPPO-BN** | >350 | Hydrophobic | 60/80 | 35 | 1.16-1.18 | n-C4 - n-C30 | PPPO + %1 BNNS |

The average molecular weight of the MPPPO-BN polymer (18) is between about 60000 and 100000. The thermal stability of the adsorbent material was determined by thermogravimetric analysis (TGA). TGA results showed no weight loss in MPPPO-BN up to 400 °C. MPPPO-BN (21) is stable in the temperature range of 340°C - 400°C. The polymer in granular form has high molecular weight and thermal stability. The density of MPPPO-BN polymeric adsorbent (21) is in the range of 1.16 - 1.18 g/mL. The adsorbent has the ability for the treatment of VOCs in the n-C4 - n-C30 range at µg level.

### Industrial Applicability of the Invention

MPPPO-BN polymeric adsorbent (21) obtained by the method of the present invention, is a product that can be used for the determination of VOCs in indoor and ambient air.

### REFERENCES

Bertsch, W. vd., Concentration and anlalysis of organic volatiles in skylab 4, Journal of Chromatography A, 99, 673-687, 1974.
Cao, Xu-Liang ve C. Nicholas Hewitt, Evaluation of Tenax-GR adsorbent for the passive sampling of volatile organic compounds at low concentrations, Atmospheric Environment. Part A. General Topics, 27(12), 1865-1872, 1993.
Hay, Allan S., Process of making poly-(2, 6-diaryl-1, 4-phenylene ethers), U.S. Patent No. 3,432,466, 1969.
Van Wijk, R., The use of poly-para-2, 6-diphenyl-phenylene oxide as a porous polymer in gas chromatography. Journal of Chromatographic Science, 8(7), 418-420,1970.
Zlatkis, Albert, Analysis of volatile organic compounds, U.S. Patent No. 4,003,257, 1977.

## Claims

1. A polymeric adsorbent ((MPPPO-BN (21)) of Volatile Organic Compounds (VOCs), comprises 2,6-diphenyl-p-phenylene oxide (PPPO) polymer reinforced with boron nitride nanosheet (BNNS) (13) at least 1% and maximum 5%, which provides lubrication and preventing the agglomeration of polymer particles.

2. The production method of the polymeric adsorbent (21) according to Claim 1, comprises the steps of;
**a)** Forming a reaction mixture by taking MgSO₄ (anhydrous) (1) and o-dichlorobenzene (2) into a reactor (A)
**b)** Mixing the mixture formed by adding TMEDA (3) and CuCl (4) to the reaction mixture in the step A, respectively, at room temperature under the atmosphere of dry air (5), (6) (B)
**c)** Dissolving 2,6 diphenylphenol (7) in o-dichlorobenzene (8) (C)
**d)** Adding the solution formed in the step C dropwise to the reaction mixture formed in the step B (D)
**e)** Carrying out the reaction at 85 °C for 24 hours under an atmosphere of dry air (9), (10) after the dropwise process is complete (Polymerization) (E)
**f)** Adding 1% - 2% (v/v) hydrazine (11) to the cooled polymer mixture after polymerization (E) to reduce diphenoquinone by-products (F)
**g)** Obtaining PPPO polymer (G) by passing the polymer mixture through an Al₂O₃ column after the step F
**h)** Dissolving the obtained PPPO polymer in tetrahydrofuran (THF) (12) (H)
**i)** Mixing BNNS (13) with methanol (14) by ultrasonication (I)
**j)** Purification of PPPO polymer dissolved in the step H by precipitation into the mixture obtained in the step I (J)
**k)** Filtration (K) of purified PPPO polymer and isolation (15) of methanol (14)
**l)** After filtration, the polymer collected in the filter dried in a vacuum oven at 50°C for 2 days to remove moisture (16) and solvent (17) (Drying) (L) and obtaining MPPPO-BN polymer (18)
**m)** Calcination (M) of the MPPPO-BN polymer (18) obtained after drying
**n)** Passing the calcined MPPPO-BN polymer (18) through a 60-80 mesh sieve (N) and obtaining the MPPPO-BN polymeric adsorbent (21)

3. The method according to Claim 2, the calcination process in the step m) takes place from 25 °C to 400 °C (2 °C/min) and then at 400 °C for 1 hour under N₂ atmosphere (19), (20).

4. The polymeric adsorbent (21) of Volatile Organic Compounds (VOCs) of Claim 1, wherein the MPPPO-BN (21) has the density between 1.16 and 1.18 g/mL.

5. The polymeric adsorbent (21) according to Claim 2, wherein the MPPPO-BN polymer (18) has the average molecular weight between 60000 and 100000.

6. The polymeric adsorbent (21) according to Claim 2, wherein the particle size of BNNS (13) is between 30-65 nm.

7. The method according to Claim 2, wherein the BNNS (13), which is used as an additive, is stirred in methanol (14) by ultrasonication for 1-20 minutes before precipitating the PPPO polymer.
